# EUROPÄISCHE PATENTANMELDUNG

(11) **EP 0 934 859 A1**
(43) Veröffentlichungstag der Anmeldung: **11.08.1999**
(21) Anmeldenummer: 98123712.6
(22) Anmeldetag: 12.12.1998
(51) Int. Cl.: B60T 8/26, B60T 13/66, B60T 8/00

(54) **Einrichtung zur Steuerung der Bremskraftverteilung bei einem drei- oder mehrachsigen Fahrzeug**

(30) Priorität: 05.02.1998 DE 19804465
(71) Anmelder: DaimlerChrysler AG, 70567 Stuttgart (DE)
(72) Erfinder: Reiner, Michael, 70736 Fellbach (DE); Rossmann, Eckhart, 71394 Kernen (DE)

(57) **Zusammenfassung**

Es wird eine Einrichtung zur Steuerung der Bremskraftverteilung bei einem drei- oder mehrachsigen Fahrzeug ausgegeben, dessen Bremsanlage den Radbremsen einzeln zugeordnete Aktuatoren umfaßt (18), mittels derer, gesteuert durch eine elektronische Steuereinheit (23), die Bremsen-Betätigungskräfte derart verteilbar sind, daß im zeitlichen Mittel achsbezogene Anteile des Bremsenverschleißes im Verhältnis natürlicher Zahlen zueinander stehen. Eine elektronische Steuereinheit (23), der die Ausgangsignale den Radbremsen individuell oder achweise zugeordneter Verschleiß-Sensoren (46) zugeleitet sind, bildet aus einer vergleichenden Verarbeitung gespeicherter Daten, die einen Betriebsmodus der Bremsanlage mit definierter Verteilung der Betätigungskräfte auf die Radbremsen der permantent belasteten Achsen und der Zusatzachse repräsentieren, eine für das Verhältnis aₚ/a_{z} der auf die Bremsennutzungsdauer bezogenen Verschleißrate aₚ der Bremsen mindestens einer der permanent belasteten Achsen und der Verschleißrate a_{z} der Bremsen der Zusatzachse charakteristische Größe. Ist das hierdurch repräsentierte Verhältnis um mehr als ein durch Variation der Verteilung der Betätigungskräfte ausregelbarer Variationsbereich δ(n) größer als eine ganze Zahl n (n=1,2,3...), wird die Bremsanlage auf einen Betriebsmodus umgeschaltet, der dem nächsthöheren ganzzahligen Wert des Verschleißratenverhältnisses aₚ/a_{z} entspricht.

## Beschreibung

Die Erfindung betrifft eine Einrichtung zur Steuerung der Bremskraftverteilung bei einem drei- oder mehrachsigen Fahrzeug mit elektronisch gesteuerter Bremsanlage, die den Radbremsen einzeln zugeordnete Aktuatoren umfaßt, mittels derer nach Maßgabe von Sollwert-Ausgangssignalen einer elektronischen Steuereinheit die für die Erzielung einer dem Fahrerwunsch entsprechenden Verzögerung erforderlichen Bremsen-Betätigungskräfte erzeugbar sind, die zum Zweck einer Verschleißharmonisierung mindestens während eines Teilbremsbetriebes, in dem der Bremsschlupf signifikant niedriger ist als eine Ansprechschwelle einer adhäsionsoptimierenden Bremsschlupfregelung, achsweise oder radindividuell derart verteilbar sind, daß im zeitlichen Mittel achsbezogene Anteile des Bremsenverschleißes im Verhältnis natürlicher Zahlen zueinander stehen, so daß die Verschleißgrenze der Radbremsen entweder stets gleichzeitig oder nach dem doppelten oder einem anderen mehrfachen Wert einer minimalen Nutzungsdauer Tₘ erreicht wird, innerhalb derer die rascher verschleißenden Bremsen einer Achse die Verschleißgrenze erreicht haben.

Diese Harmonisierung des Verschleißes, der mittels elektronischer oder elektromechanischer Verschleißsensoren, z.B. Positionssensoren, mittels derer im Ergebnis die Dicken der Bremsbeläge direkt oder indirekt gemessen werden, erfaßbar ist, wird angestrebt, um die für Wartungsarbeiten erforderlichen Stillstandszeiten möglichst gut nutzen zu können, d.h. minimal zu halten.

Diese Art der Verschleißharmonisierung ist für zweiachsige Fahrzeuge im Detail in der DE-43 26 256 C1 erläutert, auf deren Inhalt insoweit ausdrücklich Bezug genommen wird. Sie ist relativ einfach bei Fahrzeugen möglich, die nur permanent belastete Achsen haben, deren Radbremsen bei jedem Bremsvorgang zur Bremskraftentfaltung genutzt werden. Sie ist jedoch problematisch bei einem schweren Nutzfahrzeug, das eine bedarfsweise be- und entlastbare Zusatzachse hat, da bei einem solchen Fahrzeug die Nutzungsdauer der Zusatzachse von derjenigen der permanent belasteten Fahrzeugachsen und daher auch der Verschleißzustand der Radbremsen der Zusatzachse von demjenigen der Bremsen der permanent genutzten Achsen erheblich abweichen kann.

Aufgabe der Erfindung ist es daher, eine Einrichtung der eingangs genannten Art zur Steuerung der Bremskraftverteilung im Sinne einer Verschleißharmonisierung dahingehend zu verbessern, daß auch an einer be- und entlastbaren Zusatzachse eine Verschleißharmonisierung in Relation zu den Bremsen der permanent belasteten Fahrzeugachsen zuverlässig möglich ist.

Diese Aufgabe wird erfindungsgemäß durch die kennzeichnenden Merkmale des Patentanspruchs 1 gelöst.

Hiernach bildet die elektronische Steuereinheit aus einer vergleichenden Verarbeitung für verschiedene Verschleißzustände gespeicherter Daten, die in einem Betriebsmodus der Bremsanlage mit definierter Verteilung der Betätigungskräfte der Radbremsen der permanent belasteten Achsen und der Zusatzachse gewonnen worden sind, eine Größe, die unmittelbar das Verschleißraten-Verhältnis aₚ/a_{z} der auf die Benutzungsdauern bezogenen Verschleißrate aₚ der Bremsen mindestens einer der permanent belasteten Fahrzeugachsen und der Verschleißrate a_{z} der Bremsen der Zuatzachse repräsentiert; ist dieses Verhältnis um mehr als ein durch Variation der Verteilung der Betätigungskräfte ausregelbarer Variationsbereich δ(n) größer als eine ganze Zahl n (n=1,2,3...), so wird die Bremsanlage auf einen Betriebsmodus umgeschaltet, der dem nächsthöheren ganzzahligen Wert des Verschleißraten-Verhältnisses entspricht, das nunmehr für die Verschleiß-Harmonisierungsregelung maßgeblich ist.

Dieses Verschleißratenverhältnis ist, gleichsam unter Eliminierung der Zeit, auf einfache Weise als Verhältnis des Bremsenabriebs an den Radbremsen der permanent belasteten Fahrzeugachsen zum Bremsenabrieb an der Zusatzachse erfaßbar, wenn diese absolut meßbaren Größen jeweils fuhr dasselbe Betriebs-Intervall des Fahrzeuges gebildet werden.

Wenn die Radbremsen der Zusatzachse in der Anfangsphase - der "Lernphase" - der Verschleiß-Harmonisierungsregelung mit relativ höheren Betätigungskräften angesteuert werden als die Radbremsen der permanent belasteten Fahrzeugräder, läßt sich zum einen die Verschleiß-Relation, die harmonisierend beeinflußt werden soll, rascher und genauer erkennen, und es wird auch die Wahrscheinlichkeit erhöht, das gleichzeitige Erreichen der Verschleißgrenze an allen Fahrzeugbremsen bei einem möglicht niedrigzahligen Wert des Verschleißratenverhältnisses aₚ/a_{z} zu erreichen.

Nachdem bei der Zusatzachse ein relativ hoher Mindestbetrag des Verschleißes der Radbremsen von mehr als 50% erreicht ist, ist es zweckmäßig, die weitere Verschleiß-Harmonisierungsregelung bei festgehaltenem Verhältnis der Verschleißraten und mit relativ niedriger Verschleißrate der Bremsen der Zusatzachse weiterzufuhren. Die Radbremsen der Zusatzachse werden dadurch gleichsam in der letzten Phase der Harmonisierungs-Regelung etwas geschont, und es wird, Verschleißgleichheit an den permanent belasteten Achsen vorausgesetzt, sichergestellt, daß der Wartungsbedarf der Zusatzbremsen nicht vor dem der Bremsen der permanent belasteten Achsen eintritt.

Gemäß einer weiteren Auslegung der Steuerungseinrichtung ist diese auch in einem Modus betreibbar, in dem zur Bremskraftentfaltung überwiegend nur eine Aktivierung der Radbremsen der Zusatzachse erfolgt, um deren Verschleißrate a_{z} in einer vorgegebenen Relation aₚ/a_{z} zur Verschleißrate der Bremsen an der Referenzachse des Fahrzeuges zu halten. Diese Art der Verschleißerhöhung an den Radbremsen der Zusatzachse ist z.B. dann möglich, wenn der Fahrer bei einer Bremsung eine niedrige Verzögerung ansteuert und dabei an den Radbremsen auch nur ein vergleichsweise geringer Bremsschlupf erreicht wird. Sie ist zumindest dann zweckmäßig, wenn der Verschleiß an sämtlichen Radbremsen so weit fortgeschritten ist, daß demnächst das Regelziel - Verschleißgleichheit an den Radbremsen der Zusatzachse und an den Radbremsen der Referenzachse - erreicht werden kann. Ist andererseits an den Radbremsen der Zusatzachse die Verschleißgrenze schon nahezu erreicht, an den Radbremsen der permanent belasteten Referenzachse(n) jedoch noch nicht, wenngleich auch diese schon weitgehend verschlissen sind, so ist ein Steuerungsmodus zweckmäßig, in dem bei einer Bremsung, bei der ebenfalls nur relativ geringfügige Fahrzeugverzögerungen eingesteuert werden, die Radbremsen der Zusatzachse praktisch nicht mehr zur Bremskraftentfaltung herangezogen werden, bis wieder Verschleißgleichheit mit den Radbremsen der Referenzachse(n) erreicht ist.

Die beiden letztgenannten Arten der Verschleißregelung sind dann zweckmäßig, wenn über längere Zeit hinweg das Verschleißratenverhältnis aₚ/a_{z} auf dem erwünschten, auf eine für das Fahrzeug ermittelte Bremskraft-Verteilung gegebenen Wert geblieben war, sich dann jedoch innerhalb relativ kurzer Betriebszeitspannen rascher als erwartet geändert hat, was aufgrund untypischer Betriebssituationen des Fahrzeuges geschehen sein konnte. Um diese Art der Verschleißregelung ausnutzen zu können, ist es zweckmäßig, wenn die elektronische Steuereinheit mit einem Langzeitspeicher versehen ist, dessen Inhalt einen Vergleich der Verschleißentwicklung über große Zeitspannen der Betriebsdauer des Fahrzeuges hinweg ermöglicht.

Weitere Einzelheiten der erfindungsgemäßen Bremsdruck-Steuerungseinrichtung ergeben sich aus der nachfolgenden Beschreibung eines speziellen Ausführungsbeispiels sowie der Erläuterung von Funktionen ihrer elektronischen Steuereinheit anhand der Zeichnung. Es zeigen:
- Fig. 1: eine vereinfachte Schaltbilddarstellung einer elektropneumatischen Bremsanlage für ein Fahrzeug mit be- und entlastbarer Zusatzachse und einer Einrichtung zur verschleißharmonisierenden Steuerung der Bremskraft-Verteilung und
- Fig. 2: ein Diagramm zur Erläuterung der Funktion der Steuerungseinrichtung gemäß Fig. 1.

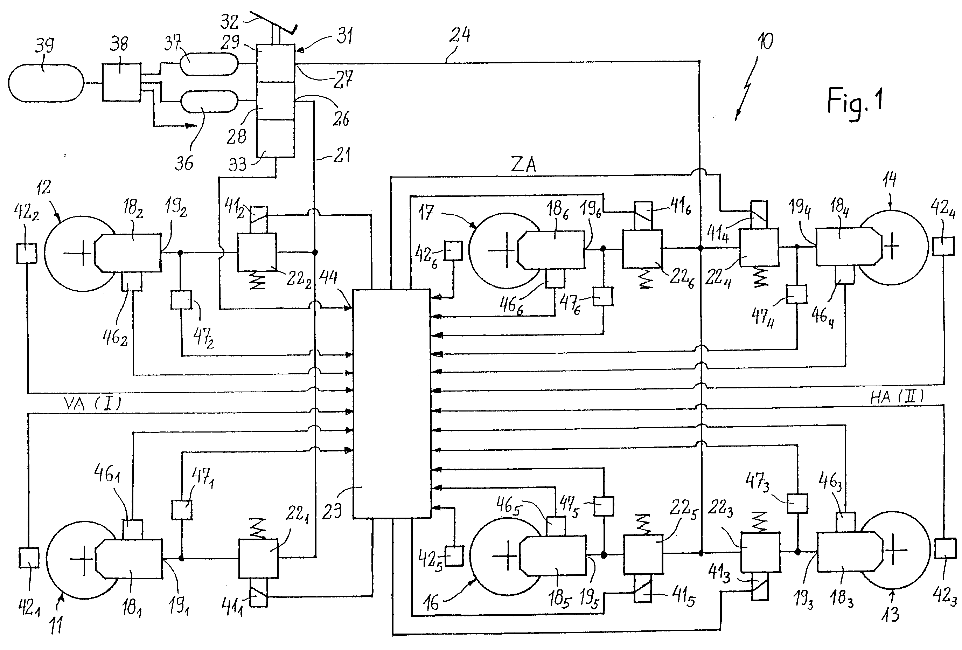

Durch die in der Fig. 1 insgesamt mit 10 bezeichnete elektropneumatische Bremsanlage ist ein drei-achsiges Fahrzeug repräsentiert, für das zum Zweck der Erläuterung vorausgesetzt sei, daß es sich um ein schweres Nutzfahrzeug handelt, das zwischen einer durch die beiden Vorderradbremsen 11 und 12 repräsentierten Vorderachse (VA) und einer durch die beiden Hinterradbremsen 13 und 14 repräsentierten Hinterachse (HA), die im Fahrbetrieb permanent belastet sind, eine durch die Radbremsen 16 und 17 repräsentierte Zusatzachse (ZA) hat, die, wenn das Fahrzeug schwer beladen ist, zur Abstützung des Fahrzeuges auf der Fahrbahn mit herangezogen werden kann, und, wenn das Fahrzeug nur mäßig beladen ist, gegebenenfalls sogar von der Fahrbahn abhebbar ist, um Bremsen- und Reifenverschleiß an der Zusatzachse zu vermeiden und auch den Kraftstoffverbrauch des Fahrzeuges zu reduzieren.

Zur Betätigung der Radbremsen 11 bis 14 sowie 16 und 17 sind diesen einzeln zugeordnete, lediglich schematisch angedeutete Aktuatoren 18₁ bis 18₆ vorgesehen, z.B. Membranzylinder für sich bekannter Bauart, die an ihren Druck-Versorgungsanschlüssen 19₁ bis 19₆ anstehende Steuerdrücke in zu diesen proportionale Bremsen-Betätigungskräfte umsetzen, die über formschlüssig wirkende Betätigungselemente der Aktuatoren in Anpreßkräte umsetzbar sind, mit denen - verschleißbehaftete - Bremsbeläge der Radbremsen an deren Rotoren, Bremsscheiben oder -Trommeln, je nach Bremsentyp, anpreßbar sind.

Die Radbremsen 11 und 12 des linken und des rechten Vorderrades des Fahrzeuges sind zu einem Vorderachs-Bremskreis I zusammengefaßt, dessen Betätigungs-Druck-Versorgung über eine gemeinsame Hauptbremsleitung 21 erfolgt, an die die beiden Aktuatoren 18₁ und 18₂ der beiden Vorderradbremsen 11 und 12 über je ein elektrisch ansteuerbares Bremsdruck-Regelventil 22₁ bzw. 22₂ angeschlossen sind, die eine z.B. federzentrierte Grundstellung haben, in der ein Antriebsdruckraum des jeweiligen Bremsen-Aktuators 18₁ bzw. 18₂ mit der Hauptbremsleitung 21 verbunden ist und somit eine dem in der Hauptbremsleitung 21 herrschenden Druck proportionale Bremskraftentfaltung möglich ist. Die Bremsdruck-Regelventile 22₁ und 22₂ der Vorderradbremsen 11 und 12 sind durch Ausgangssignale einer elektronischen Steuereinheit 23 in eine Sperrstellung steuerbar, der Konstanz der in der jeweiligen Bremse 11 oder 12 entfalteten Bremskraft entspricht, und, ebenfalls durch Ausgangssignale der elektronischen Steuereinheit 23 in eine Druck-Entlastungsstellung steuerbar, in der der jeweils angeschlossene Bremsen-Aktuator 18₁ und/ oder 18₂ belüftet und demgemäß die an der jeweiligen Radbremse 11 und/oder 12 entfaltete Bremskraft reduziert wird.

Die Hinterradbremsen 13 und 14 und die Radbremsen 16 und 17 der Zusatzachse sind zu einem Bremskreis II zusammengefaßt, dessen Steuerdruck-Versorgung über eine zweite Hauptbremsleitung 24 erfolgt, an die die Bremsen-Aktuatoren 18₃ und 18₄ der Hinterradbremsen 13 und 14 und die Bremsen-Aktuatoren 18₅ und 18₆ der Bremsen 16 und 17 der Zusatzachse über je ein zu den Bremsdruck-Regelventilen 22₁ und 22₂ der Vorderradbremsen 11 und 12 bau- und funktionsanaloges Bremsdruck-Regelventil 22₃ und 22₄ bzw. 22₅ und 22₆ angeschlossen sind.

Die Hauptbremsleitungen 21 und 24 der beiden Bremskreise I und II sind an diesen einzeln zugeordnete Druckausgänge 26 bzw. 27 zweier funktionsanaloger Sektionen 28 bzw. 29 eines insgesamt mit 31 bezeichneten Betriebs-Bremsventils angeschlossen, die gemeinsam, "gleichsinnig" mittels eines Bremspedals 32 im Sinne einer Druck-Erhöhung oder Absenkung in der jeweiligen Hauptbremsleitung 21 bzw. 24 beätigbar sind; der in diese Hauptbremsleitungen 21 bzw. 24 eingekoppelte Druck ist jeweils dem Betätigungsweg des Bremspedals 32 proportional; der Betätigungsweg des Bremspedals wird mittels eines elektronischen oder elektromechanischen Pedalweg-Sensors 33 erfaßt, dessen elektrisches Ausgangssignal ein Maß für die Fahrzeugverzögerung ist, die der Fahrer durch Betätigung des Bremspedals 32 erreichen möchte.

Dieses Ausgangssignal des Pedalweg-Sensors 33 ist der elektronischen Steuereinheit 23 als Verzögerungs-Sollwert-Signal über eine Eingabe-Leitung 34 zugeleitet.

Den beiden Bremskreisen I und II ist je ein pneumatischer Druckspeicher 36 bzw. 37 zugeordnet, der über ein Mehr-Wege-Sicherheitsventil 38 aus einem zentralen pneumatischen Druckspeicher 39 aufladbar ist, der seinerseits mittels eines vom Fahrzeugmotor antreibbaren, nicht dargestellten Kompressors, auf einem Mindest-Ausgangsdruck gehalten wird.

Die Bremsdruck-Regelventile 22₁ bis 22₆ nehmen im stromlosen Zustand ihrer Steuermagnet-Systeme 41₁ bis 41₆ eine Grundstellung ein, in der die Aktuatoren 18₁ bis 18₆ der Radbremsen 11 bis 14 sowie 16 und 17 an die Hauptbremsleitungen 21 bzw. 24 angeschlossen sind und demgemäß Steuerdruck zur Bremskraft-Entfaltung in die Aktuatoren 18₁ bis 18₆ einkoppelbar ist.

Die Bremsdruck-Regelventile 22₁ bis 22₆ sind durch Erregerstrom-Ausgangssignale der elektronischen Steuereinheit 23 definierter Stromstärke in eine Druck-Halte-Stellung steuerbar, in der die Aktuatoren 18₁ bis 18₆ der Radbremsen 11 bis 14 sowie 16 und 17 gegen die jeweilige Hauptbremsleitung 21 bzw. 24 abgesperrt sind, mit der Folge, daß die voreingesteuerte Betätigungskraft konstant bleibt. Die Bremsdruck-Regelventile 22₁ bis 22₆ sind durch Erregerstrom-Ausgangssignale definierter anderer, z.B. höherer Stromstärke in eine Druckabbau-Stellung steuerbar, in der die Aktuatoren 18₁ bis 18₆ belüftet sind und demgemäß die Bremsen-Betätigungskräfte abgesenkt werden.

Es versteht sich, daß zur Implementierung der erläuterten Bremskraft-Steuerungsfunktionen anstelle von 3-Stellungs-Ventilen, wie anhand der Fig. 1 erläutert, jeweils auch eine Kombination von zwei 2/2-Wege-Magnetventilen verwendet werden könnte, deren eines als Grundstellung die Druckaufbau-Stellung und als Schaltstellung die Sperrstellung hat, und deren zweites als Grundstellung die Sperr-Stellung und als Schalt-Stellung die Druckabbau-Stellung hat, wobei solche Ventil-Paare mit gleicher Erregerstromstärke ansteuerbar sind.

Durch die nachfolgende Erläuterung von Funktionen, deren Steuerung durch die elektronische Steuereinheit 23 vermittelt wird, soll auch deren elektronisch-schaltungstechnischer Aufbau als im Detail beschrieben angesehen werden, da unterstellt werden kann, daß ein Fachmann der elektronischen Schaltungs- und Regelungstechnik die elektronische Steuereinheit 23 bei Kenntnis ihres Funktionszweckes ohne weiteres realisieren kann.

Nach Maßgabe der Ausgangssignale des Pedalstellungsgebers 33, die jeweils ein Maß für die Verzögerung sind, die der Fahrer durch die Bremsung erzielen möchte, generiert die elektronische Steuereinheit 23 Ansteuersignale für die Bremsdruck-Regelventile 22₁ bis 22₆, über die die Betätigungsdruck-Einkopplung in die Bremsen-Aktuatoren 18₁ bis 18₆ erfolgt, so, daß die als Fahrerwunsch eingesteuerte Soll-Verzögerung auch erreicht wird, wobei diese Verzögerung mittels der den Fahrzeugrädern einzeln zugeordneten Raddrehzahlsensoren 42₁ bis 42₆ erfaßt wird.

Hei Bremsungen, bei denen an mindestens einem der Fahrzeugräder ein vorgegebener Schwellenwert des Bremsschlupfes überschritten wird, sei es, weil eine hohe Fahrzeugverzögerung eingesteuert wird, oder weil der nutzbare Kraftschlußbeiwert gering ist, wird die Betätigungsdruck-Zumessung zu den Aktuatoren 18₁ bis 18₆ im Sinne einer adhäsionsoptimierten Bremsung so gesteuert, daß sich gleiche oder annähernd gleiche Werte des Bremsschlupfes an den einzelnen Radbremsen 11 bis 16 ergeben, was, zumindest bei Geradeausfahrt, Gleichheit der Radumfangs-Geschwindigkeiten der einzelnen Fahrzeugräder entspricht.

Diese insoweit erläuterte Art der Bremskraft-Steuerung und deren Verteilung auf die einzelnen Radbremsen 11 bis 16 ergibt, unabhängig von der Fahrzeug-Gesamtmasse und auch unabhängig davon, ob das Fahrzeug bergauf oder bergab fährt, stets diejenige Fahrzeugverzögerung, die mit dem durch Betätigung des Bremspedals 32 ausgelösten Sollwert-Ausgangssignal des Pedalweg-Sensors 33 korreliert ist, das der elektronischen Steuereinheit 23 an deren Sollwert-Eingang 44 zugeleitet ist. Es wird eine gleichsam ideale Bremskraftverteilung erzielt, die gleicher Kraftschlußausnutzung an sämtlichen Fahrzeugrädern entspricht, dies natürlich unter der Voraussetzung, daß die Reifen dieselben Reifencharakteristiken (Reibwert-/Bremsschlupf-Kennlinien) haben.

Die mittels der Ventilsektionen 28 und 29 des BetriebsBremsventils 31 in die Hauptbremsleitungen 21 und 24 einkoppelbaren Drücke p_{VA} und p_{HAZ} sind um eine Aussteuermarge Δp(z) von z.B. 10% des jeweiligen Druckabsolutwertes größer als diejenigen Drücke p_{VA} und p_{HAZ}, die bei jeweils höchstmöglicher Beladung des Fahrzeuges in die Bremsen-Aktuatoren 18₁ bis 18₆ eingekoppelt werden müssen, um den eingesteuerten Verzögerungs-Sollwert innerhalb einer vorgegebenen Ansprechzeitspanne von maximal 0,2s zu erreichen.

Durch dieses Überangebot von Steuerdruck, der an den Druckausgängen 26 und 27 der als Proportinalventile wirkenden Bremsventil-Sektionen 28 und 29 bereitgestellt wird, ist es in jeder Bremssituation möglich, eine Bremskraft-Verteilung einzusteuern, die zwar nicht mehr der Bedingung gleicher Kraftschlußausnutzung an sämtlichen Fahrzeugrädern genügt, es jedoch erlaubt, an einzelnen Fahrzeugrädern, z.B. denjenigen der Zusatzachse, eine gegenüber den Fahrzeugrädern der Hinterachse höhere Bremskraft einzusteuern, um dadurch eine Harmonisierung des Bremsenverschleißes zu erzielen, z.B. derart, daµ an sämtlichen Radbremsen 11 bis 16 die Verschleißgrenze ihrer Bremsbeläge gleichzeitig erreicht wird und die Radbremsen gleichzeitig gewartet werden können, was erheblich kostengünstiger ist als eine Rad- oder achsweise Wartung der Radbremsen.

Eine im vorgenannten Sinne verschleißharmonisierende Steuerung oder Regelung der Bremskraft-Verteilung setzt voraus, daß die Radbremsen 11 und 12 sowie 13 und 14 der permanent belasteten Fahrzeugachsen konstruktiv so ausgelegt sind, daß, einen definierten Beladungszustand des Fahrzeuges vorausgesetzt, die Verschleißraten an der Vorderachse und an der Hinterachse gleich sind oder in einem festen ganzzahligen Verhältnis zueinander stehen, wobei zum Zweck der Erläuterung angenommen sei, daß die Radbremsen 11 und 12 der Vorderachse und die Radbremsen 13 und 14 der Hinterachse dieselbe Verschleißrate aₚ haben.

Für die Radbremsen 16 und 17 der Zusatz-Räder sei dieselbe Auslegung angenommen wie für die Radbremsen 13 und 14 der Ninterachs-Räder.

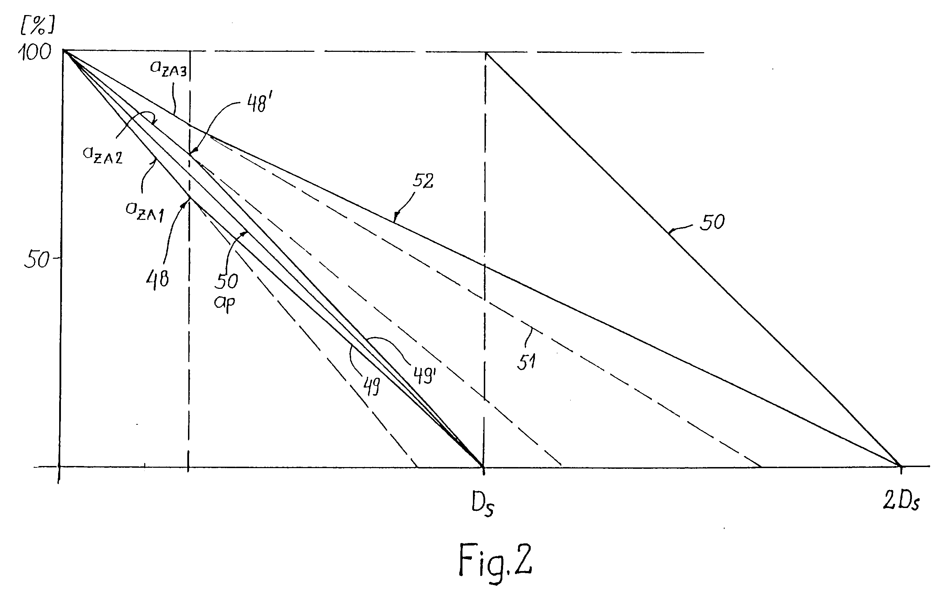

Unter diesen Voraussetzungen ist mittels der elektronischen Steuereinheit 23 eine verschleißharmonisierende Bremskraft-Verteilungs-Steuerung, zu deren Erläuterung nunmehr auch auf das Diagramm der Fig. 2 Bezug genommen sei, wie folgt implementierbar:

Nach einer Wartung der Bremsanlage, bei der z.B. sämtliche Bremsbeläge erneuert worden sind, wird in einer Anfangsphase der Harmonisierungs-Steuerung aus einer vergleichenden Verarbeitung verschleißcharakteristischer elektrischer Ausgangssignale den Aktuatoren 18₁ bis 18₆ der Radbremsen einzeln zugeordneter Belag-Verschleiß-Sensoren 46₁ bis 46₆ das Verschleißraten-Verhältnis a_{VA}/a_{HA}/a_{ZA} bestimmt, wobei als Maß für den Verschleiß der mittels elektronischer oder elektromechanischer Wegsensoren der genau erfaßbare Nachstellweg gemessen wird, um den die Bremsenbelag-Träger gegenüber einer dem noch nicht verschleißbehafteten Zustand der Bremsenbeläge entsprechenden Position verschoben werden müssen, um in Anlage mit dem Bremsen-Rotor, z.B. einer Bremsscheibe zu gelangen. Dieser Nachstell-Weg ist bei einem maximalen Absolutwert von 4-5cm auf etwa 0,15mm genau meßbar, so daß schon ein relativ geringer Belagverschleiß von einigen mm, z.B. 4mm, eine sehr genaue Ermittlung des Verschleißraten-Verhältnisses ermöglicht.

In dem Diagramm der Fig. 2 ist als Ordinate die Dicke oder die Summendicke der Bremsbeläge der Radbremsen je einer der Fahrzeugachsen jeweils in Prozent ihrer Ausgangsdicke und als Abszisse der Abrieb der permanent belasteten Fahrzeugachsen in Einheiten der Summendicke D_{S} der Radbremsen der permanent belasteten Fahrzeugachsen aufgetragen. Hierbei ist vorausgesetzt, daß die Radbremsen 11 bis 14 auf Verschleißgleichheit regelbar sind und demgemäß ihr Verschleißgrad durch die periodische Folge von Geraden 50 der konstanten Neigung aₚ darstellbar ist.

In der Darstellung der Fig. 2 sind die Verschleißraten, die sich unter den möglichen Regelungsbedingungen ergeben, jeweils durch die diesen Regelungsbedingungen entsprechenden unterschiedlichen Steigungen der Verschleißkennlinien gegeben.

In der Anfangsphase der Verschleißüberwachung, die der Ermittelung der Verschleißraten dient, werden die Radbremsen 16 und 17 der Zusatzachse etwas stärker belastet als diejenigen der permanent belasteten Fahrzeugräder, indem die Aktuatoren 18₅ und 18₆ der Zusatzachs-Bremsen 16 und 17 mit z.B. um 10% höheren Drücken angesteuert werden als die Aktuatoren 18₁ bis 18₄ der Radbremsen 11 bis 14 der permanent belasteten Fahrzeugachsen. Zur diesbezüglichen Überwachung der Betätigungsdruck-Verhältnisse vorgesehene, den Bremsen-Aktuatoren 18₁ bis 18₆ je einzeln zugeordnete, elektronische oder elektromechanische Drucksensoren sind in der Fig. 1 mit 47₁ bis 47₆ bezeichnet.

Ergibt der in der einleitenden "Lern"-Phase der Verschleißüberwachung durchgeführte Verschleißratenvergleich, daß die Verschleißrate a_{ZA} der Radbremsen 16 und 17 der Zusatzachse von den als gleich vorausgesetzten Verschleißraten a_{P} der Radbremsen 11 bis 14 der permanent belasteten Fahrzeugachsen nur geringfügig abweicht, z.B. etwas größer ist als deren Verschleißrate a_{P}, wie in dem Verschleißdiagramm der Fig. 2 durch den am steilsten abfallenden Anfangsabschnitt a_{ZA1}, der für diesen Fall die Entwicklung des Bremsenverschleißes an den Radbremsen 16 und 17 der Zusatzachse wiedergebenden, insgesamt mit 48 bezeichneten Verschleißkennlinie veranschaulicht, oder etwas geringer ist als die Verschleißrate der Radbremsen der permanent belasteten Fahrzeugachsen, wie durch den Anfangsabschnitt a_{ZA2} der in diesem Falle den Bremsen-Verschleiß der Zusatzachsbremsen 16 und 17 wiedergebenden, insgesamt mit 48' bezeichneten Verschleißkennlinie veranschauchlicht, die einen Verschleißverhalten der Bremsen 16 und 17 der Zusatzachse entspricht, das beim Erreichen der Verschleißgrenze an den Radbremsen 11 bis 14 der permanent belasteten Fahrzeugachsen eine Restdicke der Bremsbeläge der Zusatzachs-Bremsen von etwa 15% ihrer Ausgangsdicke ergäbe, wird die elektronische Steuereinheit 23 selbsttätig auf einen Betriebsmodus eingestellt, in dem die Bremskraft-Verteilung durch Erniedrigung bzw. Erhöhung der Betätigungsdruck-Zumessung zu den Aktuatoren 18₅ und 18₆ der Radbremsen 16 und 17 der Zusatzachse so geändert ist, daß auch an diesen die Verschleißgrenze gleichzeitig mit den Radbremsen 11 bis 14 der permanent belasteten Achsen erreicht wird, wie durch die "Ziel"-Abschnitte 49 bzw. 49' der Verschleißkennlinien 48 und 48' des Diagramms 50 der Fig. 2 veranschaulicht.

Hat die einleitende Phase der Verschleißüberwachung an der Zusatzachse ergeben, daß der Verschleiß an deren Radbremsen 16 und 17 signifikant geringer ist als der Bremsenverschleiß der permanent belasteten Fahrzeugräder, wie durch den Anfangsabschnitt a_{ZA3} der insgesamt mit 52 bezeichneten Verschleißkennlinie repräsentiert, so daß, entsprechend der Extrapolationsgeraden 51 des Diagramms der Fig. 2 die Bremsbeläge der Zusatzachsbremsen 16 und 17 bei Erreichen der Verschleißgrenze an den Radbremsen der permanent belasteten Fahrzeugachsen noch eine Restdicke von etwa 40% ihrer Anfangsdicke hätten, wählt die elektronische Steuereinheit 23 selbsttätig einen Betriebsmodus, dem die durch die Verschleißkennlinie 52 repräsentierte Verschleißentwicklung an den Zusatzachsenbremsen 16 und 17 entspricht, derart, daß an diesen die Verschleißgrenze erst dann erreicht wird, nachdem an den Radbremsen der permanent belasteten Fahrzeugachsen zwei Bremsbelagsätze verschlissen worden sind.

Die elektronische Steuereinheit 23 ist zweckmäßigerweise mit einem Langzeitspeicher versehen, in dem in einer Vielzahl von Verschleiß-Meßzyklen gewonnene Verschleißdaten speicherbar sind, die zu einer zunehmend genaueren Erkennung der Verschleißentwicklung und demgemäß auch zu einer genaueren Steuerung der Bremskraft-Verteilung im Sinne der beabsichtigten Koinzidenz des Erreichens der Verschleißgrenzen an sämtlichen Radbremsen führt.

Bezüglich der Radbremsen 11 bis 14 der permanent belasteten Fahrzeugachsen arbeitet die elektronische Steuereinheit bei der zur Erläuterung gewählen Auslegung in einem Betriebsmodus, der auf Verschleißgleichheit an den einzelnen Radbremsen abzielt, d.h. schon bei geringen Abweichungen von derselben eine Bremskraft-Verteilung einsteuert, die schon nach einem relativ kleinen Bruchteil der gesamten Überwachungszeit wieder zu Verschleißgleichheit an den einzelnen Radbremsen 11 bis 14 führt oder zu dem festen ganzzahligen Wert, in dem die Verschleißraten der unterschiedlich verschleißenden Radbremsen zueinander stehen.

## Patentansprüche

1. Einrichtung zur verschleißharmonisierenden Steuerung der Bremskraftverteilung bei einem drei- oder mehrachsigen Fahrzeug, dessen Bremsanlage den Radbremsen einzeln zugeordnete Aktuatoren umfaßt, mittels derer, gesteuert durch eine elektronische Steuereinheit, die für die Erzielung einer dem Fahrerwunsch entsprechenden Verzögerung erforderlichen Bremsen-Betätigungskräfte erzeugbar sind, die zum Zweck einer Verschleißharmonisierung mindestens während eines Teilbremsbetriebs, in dem der Bremsschlupf signifikant niedriger ist als eine Ansprechschwelle einer adhäsionsoptimierenden Bremsschlupfregelung, achsweise oder radindividuell derart verteilbar sind, daß im zeitlichen Mittel achsbezogene Anteile des Bremsenverschleißes im Verhältnis natürlicher Zahlen zueinander stehen, wobei das Fahrzeug eine bedarfsweise be- und entlastbare Achse hat und den Radbremsen des Fahrzeuges individuell oder achweise zugeordnete elektronische oder elektromechanische Sensoren vorgesehen sind, deren elektrische Ausgangssignale die mittels der elektronischen Steuereinheit auswertbare Information über den Verschleißgrad der Radbremsen enthalten, **dadurch gekennzeichnet**, daß die elektronische Steuereinheit (26) aus einer vergleichenden Verarbeitung für verschiedene Verschleißzustände gespeicherter Daten, die einen Betriebsmodus der Bremsanlage mit definierter Verteilung der Betätigungskräfte auf die Radbremsen der permantent belasteten Achsen und der Zusatzachse repräsentieren, eine für das Verhältnis aₚ/a_{z} der Verschleißrate aₚ der Bremsen mindestens einer der permanent belasteten Achsen und der Verschleißrate a_{z} der Bremsen der Zusatzachse charakteristische Größe bildet, und, wenn das hierdurch repräsentierte Verhältnis um mehr als ein durch Variation der Verteilung der Betätigungskräfte ausregelbarer Variationsbereich δ(n) größer ist als eine ganze Zahl n (n=1,2,3...), die Bremsanlage selbsttätig auf einen Betriebsmodus umschaltet, der dem nächsthöheren ganzzahligen Wert des Verschleißratenverhältnisses aₚ/a_{z} entspricht.

2. Einrichtung nach Anspruch 1, **gekennzeichnet durch** eine Auslegung der elektronischen Steuereinheit dahingehend, daß in einer Anfangsphase der Verschleißraten-Erfassung die Radbremsen (16,17) der Zusatzachse mit relativ höheren Bremskräften ansteuerbar sind als die Radbremsen der Vergleichsachse, bis an der Zusatzachse ein für einen Vergleich mit den Bremsen der Referenzachse ausreichender Mindest-Verschleißgrad erreicht ist.

3. Einrichtung nach Anspruch 1 oder Anspruch 2, **gekennzeichnet durch** eine Auslegung der elektronischen Steuereinheit dahingehend, daß ab einem Verschleißgrad a_{z} der Bremsen der Zusatzachse, der höher ist als ein relativ hoher Wert um 50%, die Verschleiß-Harnonisierungsregelung im Sinne der Einhaltung eines festen Wertes des Verhältnisses aₚ/a_{z} erfolgt.

4. Einrichtung nach einem der Ansprüche 1 bis 3, **gekennzeichnet durch** eine Auslegung der elektronischen Steuereinheit dahingehend, daß zumindest in einer Endphase der Harmonisierungsregelung die Radbremsen der Zusatzachse, zur Verschleißerhöhung, zeitweise mit einem den Bremskraftanteil der Vergleichsachse weit überwiegenden Anteil der Bremskraft betrieben werden, oder, zur Verschleißerniedrigung, nur mit einem Bruchteil derjenigen Bremskraft, die an der Vergleichsachse entfaltet wird.
